# EUROPÄISCHE PATENTSCHRIFT

(11) **EP 2 328 399 B1**
(45) Veröffentlichungstag und Bekanntmachung des Hinweises auf die Patenterteilung: **07.10.2020**
(21) Anmeldenummer: 09775607.6
(22) Anmeldetag: 24.08.2009
(51) Int. Cl.: A01G 20/20

(54) **VEGETATIONS- UND TRAGSCHICHT UND VERFAHREN ZUM HERSTELLEN DERSELBEN**
VEGETATION AND SUPPORT LAYER, AND METHOD FOR THE PRODUCTION THEREOF
COUCHE PORTANTE ET VÉGÉTALISÉE ET SON PROCÉDÉ DE PRODUCTION

(30) Priorität: 26.08.2008 AT 13172008
(43) Veröffentlichungstag der Anmeldung: 08.06.2011
(73) Patentinhaber: Eichenauer, Thomas, 4020 Linz (AT)
(72) Erfinder: Eichenauer, Thomas, 4020 Linz (AT)
(74) Vertreter: Hübscher & Partner Patentanwälte GmbH
(86) Internationale Anmeldenummer: PCT/AT2009/000325
(87) Internationale Veröffentlichungsnummer: WO 2010/022421

(56) Entgegenhaltungen:
- WO-A-98/32323
- WO-A-2007/142497
- DE-A1- 2 729 405
- DE-A1- 3 627 507
- JP-A- 10 215 687
- NL-A- 7 600 654
- US-A- 6 042 305

## Beschreibung

Die Erfindung betrifft eine Vegetations- und Tragschicht mit den Merkmalen des unabhängigen Anspruches 1. Die Erfindung betrifft weiters ein Verfahren zum Herstellen der Vegetations- und Tragschicht mit den Merkmalen des unabhängigen Anspruchs 12.

Vegetationsschichten sind aus der DE 27 29 405 A1, der WO 98/32323 A1 und der WO 2007/142497 A1 bekannt.

Vegetations- und Tragschichten sind in verschiedenen Ausführungsformen bekannt, in welchem Zusammenhang beispielhaft auf die EP 0 204 381 B1 und die GB 2 393 889 A verwiesen werden kann.

Eine Vegetations- und Tragschicht ist auch aus der DE 20 2007 009371 U bekannt. Der bekannten Vegetations- und Tragschicht, die für natürliche Sportrasen bestimmt ist, werden Kunstrasenfasern und Lavasand eingemischt. Die eingemischten Einzelfasern dienen zur Stabilisierung des Wurzelbereiches und sollen für Pflanzenwurzeln, um die Tragfestigkeit zu erhöhen, eine Verankerungsmöglichkeit schaffen. Die bei der DE 20 2007 009371 eingemischten Fasern sind Einzelfasern und haben keine wasser- und luftverteilende Wirkung.

Die Vegetations- und Tragschicht der GB 2 393 889 A ist vor allem als Bewässerungseinrichtung für Pflanzen, insbesondere Topfpflanzen, ausgebildet, wobei mit Hilfe von Erddochten Wasser aus einem am Boden befindlichen Vorrat für Wasser zu den Wurzeln geleitet werden soll.

Die EP 0 204 381 B1 betrifft eine Vegetations- und Tragschicht mit den Merkmalen des einleitenden Teils von Anspruch 1, wobei es sich um eine Anordnung für ein Sportfeld handelt, das auf einem Fundament angeordnet sein soll und aus einer Schicht natürlichem Sand bestehen soll, wobei das Sportfeld mit faserigen Teilchen gemischt ist, auf welchen ein Rasen aus Kunstgras angeordnet werden soll. Dabei ist bei dem Sportfeld gemäß der EP 0 204 381 B1 vorgesehen, dass die faserigen Teilchen Elastomerschnitzel oder -fasern sein sollen, und der gemischte Sand der Schicht wenigstens teilweise aus hydraulischer Schlacke besteht. Die bei dem Sportfeld der EP 0 204 381 B1 verwendeten faserigen Teilchen haben keinerlei wasser- oder luftverteilende oder speichernde Wirkung, da sie Elastomerschnitzel oder Elastomerfasern sind.
Der Erfindung liegt ausgehend von einer Vegetations- und Tragschicht mit den Merkmalen des einleitenden Teils von Anspruch 1 die Aufgabe zugrunde, eine Vegetations- und Tragschicht vorzuschlagen, die eine in der Bodenschicht verbesserte Wasser- und Luftverteilung aufweist und den Wasserhaushalt ausgleichend wirkt.
Gelöst wird diese Aufgabe erfindungsgemäß mit einer Vegetations- und Tragschicht, welche die Merkmale von Anspruch 1 aufweist.

Bevorzugte und vorteilhafte Ausgestaltungen der Erfindung sind Gegenstand der Unteransprüche.
Durch den Aufbau der erfindungsgemäßen Vegetations- und Tragschicht besitzt diese gegenüber den bekannten Vegetations- und Tragschichten eine verbesserte Eigenschaft, Wasser und Luft in der Bodenschicht zu verteilen. Überdies ist die erfindungsgemäße Vegetations- und Tragschicht für den Wasserhaushalt ausgleichend, da sie bei zu trockenen Böden Wasser speichernd und bei zu nassen oder undurchlässigen Böden wasserableitend wirkt.
Die im Rahmen der Erfindung verwendeten Erddochte sind luft- und wasserdurchlässige, längliche geschnittene Geotextilstreifen. Die Fäden in den Erddochten sind wirr ausgerichtet. Die Erddochte sind im Rahmen der Erfindung netzartig verbunden um die Scherfestigkeit der erfindungsgemäßen Vegetations- und Tragschicht zu erhöhen. Die verwendeten Erddochte sollen so ausgebildet sein, dass sie eine wasserdurchlässige Oberflächenstruktur aufweisen, welche es verhindert, dass Bodenfeinteile nicht oder nicht vollständig eindringen können, sodass ein Kern der Erddochte verfügbar ist, der Luft und Wasser speichern und transportieren kann.

Im Rahmen der Erfindung einsetzbare Bodenmaterialien sind Mischungen aus Ton-, Schluff-, Sand-, Kies- und Steinfraktionen, sowie biologische Werkstoffe, wie Äste, Stroh, Wurzelwerk, Torf, Humus, Kohle, Blätter und Ähnliches.
Die erfindungsgemäße Vegetations- und Tragschicht erlaubt eine Vielzahl von Anwendungsmöglichkeiten. So lässt sich die erfindungsgemäße Vegetations- und Tragschicht bei Sportplätzen (Golf, Fußball, Reitplätze), Böschungen, Skipisten, Nebenstraßen, im Gartenbau, Landschaftsbau, bei Plantagen, auf Fahr- und Gehwegen, Liegewiesen, Parkflächen, Landebahnen, Rasengittersteinen, begrünten Dächern, Blumentrögen, Begrünung von Wüsten, Straßen- und Eisenbahndämmen, Staudämmen, Deponien, Weinanbau, Erosionsschutz, Uferschutz, Versickerungsbecken, Pflanzenkläranlagen, zur Baumwurzelbelüftung, Bestattungen unter Rollrasen, in Veranstaltungsplätzen und Ähnlichem einsetzen.
Die für das Herstellen von Erddochten in der erfindungsgemäßen Vegetations- und Tragschicht verwendeten Geotextilien können Vliese sein, welche üblicherweise als Filter- und Trennlagen eingesetzt werden, wobei Grammaturen von etwa 100 bis 250 Gramm/m² üblich sind. Schwere Vliese mit Grammaturen von 400 bis 2000 Gramm/m² werden in der Regel als Schutzlagen, z.B. über Abdichtfolien, im Deponiebereich verwendet. Die Drainagefähigkeit dickerer Vliese wird in der Regel unterschätzt.
Für die erfindungsgemäß vorgesehenen Erddochte, welche zum Verteilen von Wasser und Luft eingesetzt werden, ist die Drainagefähigkeit solcher Vliese absolut ausreichend.
Im Rahmen der Erfindung sind auch Erddochte mit Glasfaseranteil vorteilhaft, wenn die Wasser- bzw. Kapillarleitung im Vordergrund steht.

Auch kann man Geotextilien (meist aus Kunststoff, natürlichen Materialien wie z.B. Hanf, Baumwolle oder Kokosfasern, Glasfasern, Steinwolle) aufgrund der großen Vielfalt leichter an die Bodenmaterialien anpassen, um z.B. ein Zusetzen der Erddochtoberfläche durch Feinteile ("clogging" bzw. "blocking") und damit einen reduzierten Wasser- und Luftdurchgang zu verhindern.

Die Erddochte können aber je nach Anwendung auch aus Kombinationen von Glasfaser, Kunststoff, natürlichen Materialien usw. bestehen.
Neben der geringeren Luftleitfähigkeit muss man bei Erddochten aus Glasfaser-Multifilamentschnüren auch auf die Kapillarleitung achten.
Falls die Erddochte bis zur Bodenoberfläche reichen, können die Glasfaserdochte von tieferen Schichten laufend Wasser hochsaugen, das dann an der Oberfläche verdunstet. Je nach Bodenmischung, Klima und Einsatzzweck können somit wenig oder nicht kapillarleitende Erddochte aus Kunststofffasern vorteilhaft sein.
Das Zerteilen z.B. der Vliese oder deren Kombinationen mit weiteren Materialien bzw. Textilien, um Erddochte herzustellen, kann durch Schneidewalzen, Messer, Wasserstrahl, Bandsägen usw. erfolgen. Das Vlies kann dabei je nach Schneideart abgerollt (auch mehrlagig) oder die Vliesrolle selber zerkleinert werden. Einer der Vorteile der Vliesstreifen ist deren kostengünstige Herstellung. Weiters können durch die Vielfalt der am Markt angebotenen Geotextilien die Materialeigenschaften optimal auf Boden und Einsatzzweck abgestimmt werden. Z.B. können die Erddochte aus Vliesstreifen eher wasseranziehend oder wasserabstoßend ausgerüstet sein. Falls aktive Pumpbewegungen der Vliesstreifen unter Lastwechsel für mehr Wasser- und/oder Lufttransport erwünscht sind, kann beispielsweise ein weiches Nadelvlies verwendet werden. Falls eine steifere Variante notwendig erscheint, kann ein zusätzlich thermisch verfestigtes oder harzbehandeltes Vlies geschnitten werden. Es können weiters die Drainagefähigkeit, die Flexibilität, Porenöffnungsweite, Faserdichte- und Durchmesser, raue oder glatte Faseroberfläche, Kapillarität, Zugfestigkeit usw. optimal gewählt werden. Ein weiterer Vorteil der Vliesstreifen (aber auch z.B. Streifen aus Multifilamentgewebe usw.) gegenüber runden Erddochten ergibt sich bei Verwendung von sehr flachen Streifen. So hat z.B. eine Ausführungsform mit den Abmessungen von 3 x 27 mm bei gleichem Volumen die etwa doppelte Oberfläche wie ein Erddocht derselben Länge mit 10 mm Durchmesser. Dadurch wird die Kontakt- und Filterfläche mit dem Boden verdoppelt, was zu einem rascheren Luft- und Wasseraustausch führt und die Reibung sowie das positiv beeinflusste Bodenvolumen vergrößert.

Auch können die Erddochte an Knotenpunkten unter Bilden von Netzen verbunden werden. Dies kann auf vielfältige Weise geschehen. Z.B. können lange Erddochte wie Fischer- oder andere Netze miteinander verknotet werden. Es können vor oder nach dem Verlegen um 90° verdrehte und übereinander gelegte Streifenscharen durch Verkleben, Verschweißen, mittels Heißschmelzkleber usw. an den Knoten verbunden werden.
Es können großflächige Geotextilien bzw. Geotextilien kombiniert mit weiteren Materialien derart eingeschnitten werden (wie bei einem Einkaufsnetz), sodass die Fläche in einer oder zwei Richtungen auseinanderziehbar wird und ein Erddochtnetz bildet. Diese Netze können in einer Ebene oder dreidimensional mit dem Erdmaterial gemischt werden. Z.B. kann das Netz entspannt auf den Boden oder auf ein Geotextil gelegt, mit einer losen Erdschicht überfüllt und dann mittels von oben durch die Erdschicht durchgeführte Haken punktweise hochgehoben bzw. auch über die Erdschicht hinausgehoben werden. Anschließend kann diese Mischung verdichtet werden. Vorteil der Erddochtnetze ist neben einem einfachen Verlegen eine noch bessere Luft- und Wasserverteilung und eine großflächige Bewehrung der Mischung. Erddochtnetze können auch mit weiteren Einzelerddochten kombiniert werden.
Zur Erosionsverminderung bei Böschungen können Erddochtnetze auch auf den Boden gelegt und punktweise tiefer gedrückt oder eingeschlagen werden. Dies kann auch z.B. mittels Erdankern oder U-förmig gebogenen Erddochten, die im Boden verbleiben und somit eine dauerhafte Verankerung des Erddochtnetzes erzeugen, durchgeführt werden. Darüber wird eine dünne Erd- oder Bewuchsschicht aufgebracht. Durch die oberflächennahe Lage des Erddochtnetzes wird nicht nur durch rein mechanisches Zurückhalten der Erde (wie bei bekannten Erosionsschutznetzen), sondern auch durch Be- bzw. Entwässern des Bodens, sowie eines geförderten Wurzelwachstums die Erosion vermindert. Bei breit geschnittenen Geotextilnetzen, die auseinander gezogen werden, verdrehen sich die einzelnen Streifen zwischen den Knotenpunkten. Dadurch ergeben sich Taschen, welche die eingefüllte Erde zusätzlich vor Erosion schützen. Erddochtnetze können auch annähernd sackförmig ausgebildet sein, um damit Wurzelballen einzuheben bzw. um Wurzelballen herum ein luft- und wasserverteilendes Netz zu bilden.

Erddochtnetze können auch in Kombination mit eingemischten oder eingeschlagenen Einzelerddochten verwendet werden.

Erddochtnetze können auch mit versteifenden bzw. erhärtenden Materialien wie z.B. Blumendraht, dicke Glasfasern, Drahtgitter, Kunststoffröhrchen, Zement, Harz usw. kombiniert werden. Z.B. kann man Vliesstreifen mit einem Draht vernähen oder um einen Draht wickeln und die Vliesränder miteinander verschweißen oder zwischen einer Vlieslage und einem Gewebe mitvernadeln usw. Die ausgesteiften Erddochte kann man zu einem dreidimensionalen Netz verbinden und durch die Öffnungen das Erdmaterial einbringen. Dadurch wird z.B. zusätzlich die Erosion an Böschungen bzw. Böschungsrutschungen verhindert.

Weiters können vor dem Streifenschneiden großflächige Geotextilkombination z.B. durch Vernadeln mehrerer Vlieslagen oder eines Nadelvlieses mit weiteren Textilien, Zugfasern bzw. Folien hergestellt werden. Zwischen und in den Vlies- bzw. Textillagen können weitere Zusatzstoffe mitvernadelt werden. Als Zusatzstoffe können z.B. Samen, Holzkohle, Bentonit, Sand, Zeolith, lonentauscher, Aktivkohle, Dünger, Sporen, Algen, Stroh, Röhrchen, wasserspeichernde Materialien und jede Kombination davon verwendet werden. Alternativ dazu können auch die bereits geschnittenen Textilstreifen mit den Zusatzstoffen verbunden werden. Auch können tiefgezogene Textilien/Folien mit weiteren Materialien kombiniert werden. Je nach Einsatzzweck sind viele weitere Varianten wie z.B. ein Glasfasergewebe um einen grobporigen Vlieskern herum vorstellbar.

Bei einer Verwendung im Sportplatzbau (z.B. Golfplatz) soll durch die luft- und wasserverteilende Wirkung das Verfilzen der oberen Grasnabe reduziert werden. Durch das Tieferleiten von Wasser können die Wurzeln tiefer eindringen, was durch Vorzugsstrukturen entlang bzw. in den Erddochten unterstützt wird. Zusätzlich können sich die Wurzeln in den Erddochten verankern. Dadurch, dass Wasser rascher von der Oberfläche in den Bodenkörper abgeführt, dort aber dann länger gespeichert wird, verringern sich Staunässe und Verdunstung, die Pflanzen haben länger Wasser und die Intervalle für künstliche Bewässerung vergrößern sich. Zusätzlich wird durch die Luftdrainage und gegebenenfalls vorgedüngte Erddochte dauerhaft eine ähnliche Wirkung wie bei Regenwurmgängen erzielt. Allerdings mit einigen zusätzlichen Vorteilen wie der erhöhten Stabilität durch Erhöhung des internen Scherwinkels und der Lastverteilung. Je nach Auslegung kann der Untergrund durch die Luftdrainage im Frühjahr schneller erwärmt und damit auch eher benutzt werden. Eine zu starke Verdichtung des Untergrundes wird durch die Erddochte verhindert. Im Gegensatz zu so genannten Superabsorbern, die spätestens nach ein paar Jahren ihre Funktion verlieren, können auf den Boden abgestimmte Erddochte aus Kunststoff ihre Funktionen dauerhaft erfüllen. Falls gewünscht können Erddochte oder Teile davon auch aus abbaubaren Materialien bestehen.
Bei einer Verwendung für Liegewiesen und Parkanlagen wird das Wurzel- und Pflanzenwachstum angeregt, das überschüssige Oberflächenwasser rasch abdrainiert und somit die Benutzungsqualität erhöht.
Bei einer Verwendung für begrünte Dächer und Pflanzentröge ergibt sich zudem eine Reduktion der notwendigen Erdschicht und damit Auflast. Weiters wird der Wasser- und Düngemittelverbrauch reduziert und die Bewässerungshäufigkeit verringert.

Im Rahmen der Erfindung besteht auch die Möglichkeit, die in der erfindungsgemäßen Vegetations- und Tragschicht verwendeten Erddochte zum Verbessern ihrer Eigenschaften oder zum Erlangen zusätzlicher Eigenschaften durch Besprühen oder Tränken zu behandeln. Solche Behandlungen können mit einem oder mehreren der nachstehend genannten Mittel ausgeführt werden: Geruchsneutralisatoren, Algen, Mikroorganismen, Holzkohle, Aktivkohle, Bentonit, Kleber, Harz, flüssige Kunststoffe, Zeolith, lonentauscher, Dünger, Pilze/Sporen, wasserspeichernde Materialien, Superabsorber, Wetting Agents, Latentwärmespeicher, Pflanzensamen, Hefen, ad- und absorbierende Materialien, Kupfer bzw. eine Kombination dieser Mittel miteinander oder mit Flüssigkeiten.
Im Rahmen der Erfindung ist es auch möglich, in die Vegetations- und Tragschicht im Bereich von beispielsweise aus mehreren Lagen bestehenden Erddochten Zusatzstoffe oder Bodenhilfsmittel einzubringen.
Solche Bodenmittel können beispielsweise sein Bentonit, Zeolith, lonentauscher, Torf, Stroh, Superabsorber, Wetting Agents, Aktivkohle, Latentwärmespeicher, Düngemittel, Pflanzensamen, Algen, Hefen, Bakterien, Pilze/Sporen, Holz, Stroh, Pflanzenreste, Kunststoffe, Geotextilien, Gummigranulat, Kunstrasenfasern, Ziegelsplitter, poröse Gesteine, Sand, Blähton, Samen, Holzkohle (auch bereits mit Mikroorganismen geimpft), ad- und absorbierende Materialien, Geruchsneutralisatoren, Kupfer, Mikroorganismen, Sand, Zugfäden, Stützdrähte, Röhrchen, wasserspeichernde Materialien oder Kombinationen davon.
Um das Eindringen von Kleinteilen in die erfindungsgemäß vorgesehenen Erddochte zu vermeiden, können diese wenigstens teilweise durch Folien oder feinporige Werkstoffe umhüllt sein. Alternativ besteht die Möglichkeit, die Oberfläche von Erddochten teilweise mittels Kleberharz verschweißen, kalandrieren usw. zu verschließen, um stellenweise nur sehr kleine oder gar keine Oberflächenporen zu erzeugen. Kleine Oberflächenporen können Durchmesser von weniger als 0,06 mm haben.
Die im Rahmen der Erfindung in der Vegetations- und Tragschicht vorgesehenen Erddochte sind in bevorzugten Ausführungsformen als Wasser- und Luftspeicher, als Luft- und Wasserverteiler, als Wurzelanker und zum Beschleunigen von Wurzel- und Pflanzenwachstum vorgesehen. Weiters können sie die Bodenscherfestigkeit und -stabilität erhöhen, Lasten verteilen, Risse verkleinern, zur Be- oder Entwässerung dienen und auch eine Bodenverdichtung vermeiden, ebenso eine Bildung von Bewuchsfilz und von Staunässe sowie zur Reduzierung des Porenwasserüberdrucks wirken.
Unter den Einsatzmöglichkeiten erfindungsgemäßer Vegetations- und Tragschichten sind besonders hervorzuheben deren Verwendung bei Sportplätzen (Fußball, Golf, Tennis, Reitplatz u.a.), Böschungen, Skipisten, Wege, Nebenstraßen, Landebahnen, im Garten- und Landschaftsbau, Liegewiesen, Parkflächen, Rasengittersteinen, begrünten Dächern, Blumenträge, Begrünung von Wüsten, Dattelplantagen, Aufforstungen, Dünenbefestigung, Straßen- und Eisenbahndämme, Staudämme, Deponien, Grabbegrünung, Sargbelüftungen, Erosionsschutz, Versicherungsbecken und -mulden, Pflanzenkläranlagen, Rigolen, Rasenmodulen, Agrarwirtschaft, Weinanbau, unter Rollrasen, Rasentragschicht.
In der erfindungsgemäßen Vegetations- und Tragschicht können weitere Zusatzstoffe bzw. Bodenhilfsmittel enthalten sein. Solche sind beispielsweise Bentonit, Zeolith, lonentauscher, Torf, Stroh, Superabsorber, Holz- und Aktivkohle, Latentwärmespeicher, Düngemittel, Pflanzensamen, Algen, Hefen, Bakterien, Pilze/Sporen, Holz, Stroh, Pflanzenreste, Kunststoffe, Geotextilien, Gummigranulat, Kunstrasenfasern, Ziegelsplitter, poröse Gesteine, Sand, Blähton.

Weitere Einzelheiten und Merkmale der Erfindung ergeben sich aus der nachstehenden Beschreibung anhand der Zeichnungen.

Es zeigt:
- Fig. 1: ein Anwendungsbeispiel einer nicht erfindungsgemäßen Vegetations- und Tragschicht für Rollrasen,
- Fig. 2: schematisch eine nicht erfindungsgemäße Anwendung zur Baumwurzelbelüftung und
- Fig. 3: ein Anwendungsbeispiel mit einer Vlieskombination.

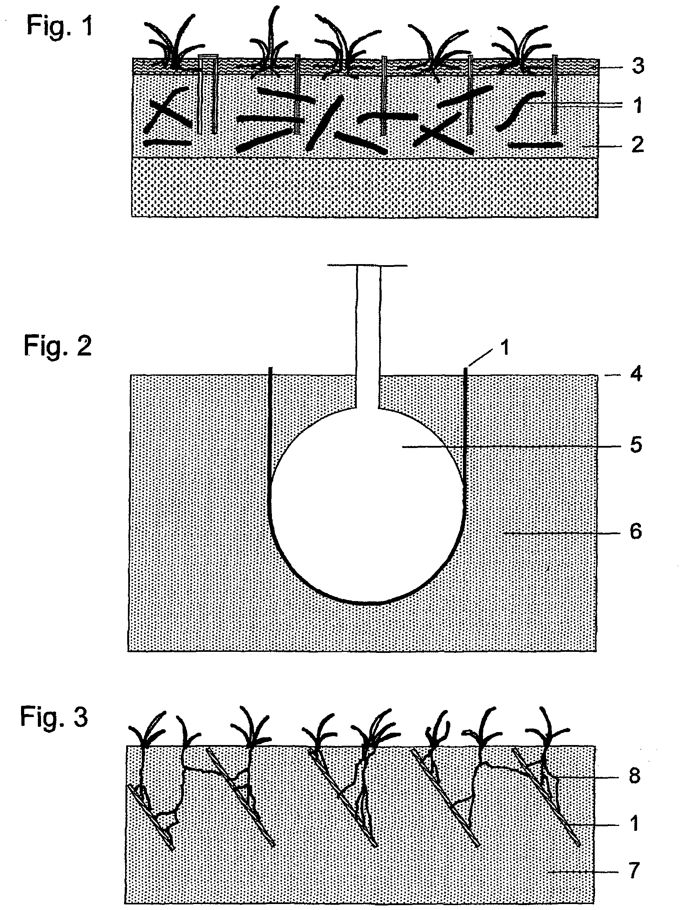

In Fig. 1 ist gezeigt, wie unter einem noch aufzubringenden Rollrasen 3 für einen Sportplatz ein Untergrund 2 aus Bodenmaterial, Dünger und Erddochten 1 in Form von Vliesstreifen wirr vermischt, 30 cm dick aufgebracht und verdichtet wird. Die Erddochte 1 bestehen z.B. aus 6 x 8 x 250 mm geschnittenen Vliesstreifen. Das Basisvlies war ein Nadelvlies aus Polypropylen mit Porenöffnungsweite = 0,09 mm und Flächenmasse von 600 g/m². Vordem Schneiden wurde auf das Nadelvlies flüssiger Dünger aufgesprüht.

Zusätzlich können noch weitere Erddochte 1 in Form von Vliesstreifen von oben (bevor oder nachdem der Rollrasen 3 aufgelegt ist) in den eingebrachten Untergrund 2 eingestochen werden. In dieser nicht erfindungsgemäße Variante haben die Erddochte 1 nicht nur wasser- und luftverteilende Funktion, sondern bieten den Wurzeln aus dem Rollrasen 3 Vorzugswege, damit diese rasch und tief einwachsen und sich verankern können. Weiters können die Erddochte 1 je nach Art des Sportplatzes, Erdmaterials und Klimas federnd, lastverteilend usw. ausgelegt werden.

Zum raschen Fixieren des Rollrasens 3 auf dem Untergrund 2 können die Erddochte 1 auch U-förmig gebogen wie Heftklammern oder als langes Band mehrfach durch den Rollrasen 3 hindurch eingestochen werden. Dazu ist eine zugfeste Ausführungsform der Erddochte 1 (z.B. Vlieskombination mit Gewebe, Zugfäden zwischen zwei Vlieslagen, Glasfaserdochte) vorteilhaft. Der Rollrasen 3 kann früher bespielt und auch bei geneigten Flächen verlegt werden. Eine zu starke Verdichtung des Bodens wird dauerhaft verhindert.

Es können auch unterschiedliche Erddochte 1 verwendet werden. Z.B. können die wirr eingemischten Erddochte 1 aus 1mm x 200mm Glasfaser-Multifilamentschnüren und die von oben eingebrachten Erddochte 1 aus 4mm x 150mm geschnittenem Kunststofffaservlies bestehen.

Zur Baumwurzelbelüftung (Fig. 2) im städtischen Bereich kann eine äußerst groß dimensionierte Ausführungsform der Erddochte 1 eingesetzt werden. Z.B. kann ein 5 cm breites, 8 mm dickes und 2,5 m langes, geschnittenes Nadelvlies (950 g/m²) oder Vlieskombination von der Erdoberfläche 4 bis zum Wurzelbereich zwischen Wurzelballen 5 und Erdreich 6 eingelegt werden. Im Gegensatz zur DE 36 00 340 A kann es auch durchgehend unter dem Wurzelballen 5 hindurch (oder auch direkt zwischen die Wurzeln des Wurzelballens 5) und auf der gegenüberliegenden Seite wieder hoch zur Erdoberfläche 4 oder darüber hinausragend geführt und damit auch zusätzlich als eine Art Tragegurt (z.B. aus einer zugfesten Kombination aus einem Kunststofffaser Nadelvlies mit zusätzlichen Zugfasern aus Polyester, Glas, Draht, Baumwolle oder Hanf) zum Heben und Platzieren des Baumes verwendet werden. Auch ist durch netzförmiges Einlegen weiterer Erddochte 1 in Form von Vliesstreifen, die sich punktförmig berühren, einfach eine dreidimensionale Verteilungsstruktur um den gesamten Wurzelballen 5 möglich. Bei Verwendung eines Erddochts 1 in Form eines federnden Vlieses kann auch durch Vibrationen (bei Straßen usw.) eine Pumpwirkung im Vlieskern und damit eine aktive Luft- und Wasserverteilung entstehen.

Eine Vlieskombination gemäß Fig. 3 wird durch Vernadeln eines 180 g/m² Nadelvlieses aus Polypropylen und eines 300 g/m² geotextilen Nadelvlieses aus Polypropylen (Dicke 2 bzw. 3 mm, Porenöffnungsweiten 0,1 bzw. 0,08 mm) hergestellt. Zwischen den beiden Vlies-Außenlagen wird eine Mischung aus Grassamen, Holzkohle und Düngemittel eingebracht und mitvernadelt. Anschließend wird die ca. 6 mm dicke Vlieskombination durch ineinander greifende Schneidwalzen in Erddochte 1 in Form von Streifen von 10 x 180 mm geschnitten. Diese Erddochte 1 sind sehr vorteilhaft z.B. bei sandreichen Böden 7 mit keinem oder nur spärlichem Bewuchs (Wüstenbegrünung) anwendbar. Dabei können sie alleine oder mit weiteren Einbaustoffen wie z.B. Torf oder Superabsorber in den sandreichen Boden 7 gemischt oder auch von schräg oben (z.B. unter 45°) in den sandreichen Boden 7 eingestochen werden.

Bei dieser Ausführungsform übernimmt das dickere Vlies hauptsächlich die Funktion der Wasserverteilung. Bentonit und Holzkohle haben in Kombination mit dem Düngemittel wasser- und nährstoffspeichernde Funktionen, wodurch die Grassamen rasch durch die Schneidränder oder das dünnere Vlies austreiben können. Die Wurzeln 8 sind sofort gut und dauerhaft in den Erddochten 1 verankert. Die Vliesschichten haben zusätzlich zur Wasserspeicherung noch die Aufgabe, Bentonit und Holzkohle dauerhaft gegen Ausschwemmen zu sichern. Die Holzkohle kann bereits vorab mit Mikroorganismen geimpft sein (Terra Preta, z.B. EP 1 739 067 A). Alternativ kann auch die fertige Kombination vor oder nach dem Schneiden mit Mikroorganismen geimpft werden.

Weitere Anwendungen für diese nicht erfindungsgemäße Ausführungsform von Erddochten ergeben sich auch etwa bei steilen Böschungen mit nährstoffreicheren Böden, wenn das Gras rasch anwachsen soll um Erosion und Hangrutschungen zu verhindern. Dabei können die Streifen vorteilhaft auch etwas länger gewählt werden um die Wurzelvernetzung zu erhöhen und das dünnere Vlies oder Textil kann aus abbaubaren Naturfasern bestehen.

## Patentansprüche

1. Vegetations- und Tragschicht mit einem Gemisch aus natürlichem Bodenmaterial und Erddochten in Form von Textilstreifen, wobei die Erddochte zum Verteilen von Wasser und Luft aus sowohl Wasser als auch Luft leitenden Geotextilstreifen mit wirr ausgerichteten Fäden bestehen und dass die Erddochte im Bodenmaterial netzartig und mit Abstand von einem tiefer liegenden, mit Wasser gefüllten Behälter oder einem Grundwasserleiter angeordnet sind.

2. Schicht nach Anspruch 1, **dadurch gekennzeichnet, dass** die Geotextilstreifen an Knotenpunkten unter Bildung eines Netzes verbunden sind.

3. Schicht nach Anspruch 1, **dadurch gekennzeichnet, dass** ein eingeschnittenes Geotextil durch Auseinanderziehen in einer oder zwei Richtungen ein Erddochtnetz bildet.

4. Schicht nach einem der Ansprüche 1 bis 3, **dadurch gekennzeichnet, dass** das Erddochtnetz punktweise hochgehoben und gegebenenfalls über die Erdschicht hinausgehoben ist.

5. Schicht nach einem der Ansprüche 1 bis 4, **dadurch gekennzeichnet, dass** das auf den Boden gelegte, punktweise tiefergedrückte Erddochtnetz mittels Erdanker oder U-förmig gebogener Erddochte dauerhaft verankert ist und dass auf das Erddochtnetz eine Erd- oder Bewuchsschicht aufgebracht wird.

6. Schicht nach einem der Ansprüche 1 bis 5, **dadurch gekennzeichnet, dass** die Erddochtnetze mit eingemischten oder eingeschlagenen Einzelerddochten kombiniert sind.

7. Schicht nach einem der Ansprüche 1 bis 6, **dadurch gekennzeichnet, dass** die Geotextilstreifen aus Glasfasern, Mineralfasern, Baumwollfasern, Kokosfasern, Hanffasern, Kunststofffasern oder Mineralwolle bestehen.

8. Schicht nach einem der Ansprüche 1 bis 7, **dadurch gekennzeichnet, dass** die Geotextilstreifen aus miteinander vollflächig oder teilweise verbundenen Lagen aus einem Geotextil und wenigstens einer weiteren Lage aus einem Geotextil, einem Textil, einer Folie oder eines Vlieses bestehen.

9. Schicht nach Anspruch 8, **dadurch gekennzeichnet, dass** zwischen den Lagen Zusatzstoffe und/oder Bodenhilfsmittel eingebracht sind und dass der Zusatzstoff bzw. das Bodenhilfsmittel ausgewählt ist aus der Gruppe bestehend aus Bentonit, Zeolith, Ionenaustauschern, Torf, Stroh, Superabsorber, Netzmittel, Aktivkohle, Latentwärmespeicher, Düngemittel, Pflanzensamen, Algen, Hefen, Bakterien, Pilze/Sporen, Holz, Stroh, Pflanzenreste, Kunststoffe, Geotextilien, Gummigranulat, Kunstrasenfasern, Ziegelsplitter, poröse Gesteine, Sand, Blähton, Samen, Holzkohle, gegebenenfalls mit Mikroorganismen geimpfte Holzkohle, adsorbierende Werkstoffe, absorbierende Werkstoffe, Geruchsneutralisatoren, Kupfer, Mikroorganismen, Sand, Zugfäden, Stützdrähte, Röhrchen, wasserspeichernde Werkstoffe oder Kombinationen von wenigstens zwei dieser Bestandteile.

10. Schicht nach einem der Ansprüche 1 bis 9, **dadurch gekennzeichnet, dass** die Geotextilstreifen wenigstens teilweise durch Folien oder feinporige Werkstoffe umgeben sind oder dass die Oberfläche der Geotextilstreifen wenigstens teilweise mit Hilfe von Klebern, Harzen, durch Verschweißen oder Kalandrieren verschlossen ist, sodass nur bereichsweise Poren, vorzugsweise Poren mit einem Durchmesser von weniger als 0,06 mm, vorliegen.

11. Schicht nach einem der Ansprüche 1 bis 10, **dadurch gekennzeichnet, dass** das Gemisch aus natürlichem Bodenmaterial und Erddochten wenigstens einen Zusatzstoff bzw. wenigstens ein Bodenhilfsmittel, ausgewählt aus der Gruppe bestehend aus Bentonit, Zeolith, Ionentauschern, Torf, Stroh, Superabsorber, Holz- oder Aktivkohle, Latentwärmespeicher, Düngemittel, Pflanzensamen, Algen, Hefen, Bakterien, Pilze/Sporen, Holz, Stroh, Pflanzenreste, Kunststoffe, Geotextilien, Gummigranulat, Kunstrasenfasern, Ziegelsplitter, poröse Gesteine, Sand, Blähton, zugemischt enthält.

12. Verfahren zum Herstellen einer Schicht nach einem der Ansprüche 1 bis 11, **dadurch gekennzeichnet, dass** zur Baumwurzelbelüftung ein Erddochtnetz um einen Wurzelballen herum eingelegt wird.

## Claims

1. Vegetation and support layer comprising a mixture of a natural soil material and soil wicks in the form of textile strips, wherein the soil wick for distributing water and air consists of geotextile strips which conduct both water and air and have maze-like oriented filaments and the soil wicks are arranged in the soil material in a net-like manner and at a distance from a deeper-lying water-filled container or a ground water storage reservoir.

2. Layer as claimed in claim 1, **characterised in that** the geotextile strips are connected at node points, forming a net.

3. Layer as claimed in claim 1, **characterised in that** a cut-in geotextile forms a soil wick net by being pulled apart in one or two directions.

4. Layer as claimed in any one of claims 1 to 3, **characterised in that** the soil wick net is lifted up at specific points and optionally is lifted beyond the soil layer.

5. Layer as claimed in any one of claims 1 to 4, **characterised in that** the soil wick net which is placed on the soil and pressed more deeply at specific points is permanently anchored by means of soil anchors or soil wicks bent in a U-shaped manner and a soil or vegetation layer is applied to the soil wick net.

6. Layer as claimed in any one of claims 1 to 5, **characterised in that** the soil wick nets are combined with mixed-in or folded-in individual soil wicks.

7. Layer as claimed in any one of claims 1 to 6, **characterised in that** the geotextile strips consist of glass fibres, mineral fibres, cotton fibres, coconut fibres, hemp fibres, plastics fibres or mineral wool.

8. Layer as claimed in any one of claims 1 to 7, **characterised in that** the geotextile strips consist of layers of a geotextile, which are connected to one another over the entire surface or partially, and at least one further layer of a geotextile, a textile, a foil or a non-woven fabric.

9. Layer as claimed in claim 8, **characterised in that** additives and/or soil aids are introduced between the layers and the additive or soil aid is selected from the group consisting of bentonite, zeolite, ion exchangers, peat, straw, super absorbers, wetting agents, active carbon, latent heat storage substances, fertilisers, plant seeds, algae, yeasts, bacteria, fungi/spores, wood, straw, plant residues, plastics, geotextiles, rubber granulate, synthetic lawn fibres, ceramics chips, porous stones, sand, expanded clay, seeds, charcoal, optionally charcoal inoculated with microorganisms, adsorbent materials, absorbent materials, odour-neutralizing substances, copper, microorganisms, sand, tensile filaments, supporting wires, small tubes, water-storing materials or combinations of at least two of these constituents.

10. Layer as claimed in any one of claims 1 to 9, **characterised in that** the geotextile strips are surrounded at least partially by foils or fine-porous materials or the surface of the geotextile strips is sealed at least partially with the aid of adhesives, resins, by welding or calendaring such that pores, preferably pores having a diameter of less than 0.06 mm are present only in certain regions.

11. Layer as claimed in any one of claims 1 to 10, **characterised in that** the mixture of natural soil material and soil wicks contains admixed therein at least one additive or at least one soil aid selected from the group consisting of bentonite, zeolite, ion exchangers, peat, straw, super absorbers, charcoal or active carbon, latent heat storage substances, fertilisers, plant seeds, algae, yeasts, bacteria, fungi/spores, wood, straw, plant residues, plastics, geotextiles, rubber granulate, synthetic lawn fibres, ceramics chips, porous stones, sand, expanded clay.

12. Method for producing a layer as claimed in any one of claims 1 to 11, **characterised in that** a soil wick net is introduced around a root ball for the purpose of tree root aeration.

## Revendications

1. Couche de végétation et de substrat avec un mélange de matériau de sol naturel et de mèches de sol sous forme de bandes textiles, dans laquelle les mèches de sol sont constituées de fils orientés dans toutes les directions pour distribuer l'eau et l'air des bandes géotextiles qui conduisent aussi bien l'eau que l'air, et les mèches de sol en matériau de sol sont disposées en réseau, à distance d'un récipient rempli d'eau situé plus en profondeur ou d'une nappe aquifère.

2. Couche selon la revendication 1, **caractérisée en ce que** les bandes géotextiles sont reliées au niveau de nœuds, formant un réseau.

3. Couche selon la revendication 1, **caractérisée en ce qu'**un géotextile incisé forme un réseau de mèches pour terre par étirement dans une ou deux directions.

4. Couche selon une des revendications 1 à 3, **caractérisée en ce que** le réseau de mèches de sol est soulevé par endroits et éventuellement élevé au-dessus de la couche de terre.

5. Couche selon une des revendications 1 à 4, **caractérisée en ce que** le réseau de mèches de sol posé au sol et enfoncé par endroits est ancré durablement au moyen d'ancres de sol et de mèches de sol courbées en forme de U et qu'une couche de terre et de végétation est posée sur le réseau de mèches de sol.

6. Couche selon une des revendications 1 à 5, **caractérisée en ce que** les réseaux de mèches de sol sont combinés avec des mèches de sol individuelles incorporées ou intégrées.

7. Couche selon une des revendications 1 à 6, **caractérisée en ce que** les bandes géotextiles sont constituées de fibres de verre, de fibres minérales, de fibres de coton, de fibres de coco, de fibres de chanvre, de fibres de plastique ou de laine minérale.

8. Couche selon une des revendications 1 à 7, **caractérisée en ce que** les bandes géotextiles sont constituées de couches d'un géotextile reliées entre elles sur toute leur surface ou partiellement et d'au moins une autre couche d'un géotextile, d'un textile, d'un film ou d'un matériau non tissé.

9. Couche selon la revendication 8, **caractérisée en ce que** des additifs et/ou des agents d'amélioration du sol sont insérés entre les couches et que l'additif ou l'agent d'amélioration du sol est choisi dans le groupe constitué de bentonite, de zéolithe, d'échangeurs d'ions, de tourbe, de paille, de superabsorbants, de réticulants, de charbon actif, d'accumulateurs de chaleur latente, de fertilisants, de graines de plantes, d'algues, de levures, de bactéries, de champignons/spores, de bois, de paille, de déchets de plantes, de matières plastiques, de géotextiles, de granulé de caoutchouc, de fibres de gazon artificiel, de fragments de brique, de pierres poreuses, de sable, d'argile expansée, de graines, de charbon de bois, de charbon de bois éventuellement colonisé par des microorganismes, de matières adsorbantes, de matières absorbantes, de neutraliseurs d'odeur, de cuivre, de microorganismes, de sable, de fils de traction, de fils de support, de petits tubes et de matières retenant l'eau ou de combinaisons d'au moins deux de ces éléments.

10. Couche selon une des revendications 1 à 9, **caractérisée en ce que** les bandes géotextiles sont entourées au moins partiellement par des films ou des matériaux à pores fins ou que la surface des bandes géotextiles est obturée au moins partiellement à l'aide de colles, de résines, par soudage ou par calandrage, de sorte qu'il n'y a des pores que par endroits, de préférence des pores de moins de 0,06 mm de diamètre.

11. Couche selon une des revendications 1 à 10, **caractérisée en ce que** le mélange de matériau de sol naturel et de mèches de sol contient au moins un additif ou au moins un agent d'amélioration du sol choisi dans le groupe constitué de bentonite, de zéolithe, d'échangeurs d'ions, de tourbe, de paille, de superabsorbants, de charbon de bois ou actif, d'accumulateurs de chaleur latente, de fertilisants, de graines de plantes, d'algues, de levures, de bactéries, de champignons/spores, de bois, de paille, de déchets de plantes, de matières plastiques, de géotextiles, de granulé de caoutchouc, de fibres de gazon artificiel, de fragments de brique, de pierres poreuses, de sable et d'argile expansée.

12. Procédé de fabrication d'une couche selon une des revendications 1 à 11, **caractérisé en ce que**, pour aérer les racines des arbres, un réseau de mèches de sol est inséré autour d'une motte de racines.
